# EUROPEAN PATENT APPLICATION

(11) **EP 0 818 303 A1**
(43) Date of publication of application: **14.01.1998**
(21) Application number: 96941660.1
(22) Date of filing: 18.12.1996
(51) Int. Cl.: B30B 9/30, B09B 3/00

(54) **MACHINE FOR COMPACTING/PACKAGING RESIDUAL MATERIAL**

(30) Priority: 22.12.1995 ES 9503244 U
(71) Applicant: Micaringo, S.L., 48990 Getxo (ES)
(72) Inventor: BILBAO GARCIA-BORREGUERO, Miguel Angel, E-48990 Getxo (ES)
(74) Representative: Maldonado Jordan, Julia
(86) International application number: ES9600241
(87) International publication number: WO9723346

(57) **Abstract**

The machine for compacting/packaging waste material is comprised of a collector container (22) which can be displaced sideways with respect to the main frame (1) of the machine so that its mouth is directly accessible for depositing waste materials. The container, once filled, is situated within the frame (1) under a pressing head (21) which compacts the waste materials. The bottom of the container (22) is embodied by a movable tray (23) which is either part of or indepent from the remainder of the container, so that after compaction, said tray (23) is removed sideways in order to allow the compact block of waste material to move downwards to a packaging unit (3) where the block is housed in a bag which is closed and retracted. The tray (23) acts also as a collector for liquid residual materials, by conveying them towards a lateral collector with a drain (41) and an impeller pump (42) outside. Appropriately distributed washing nozzles provide for the periodical cleaning of elements which are in contact with waste materials.

## Description

The present invention deals with a new waste compactor/packer, specifically for urban solid waste, although it also incorporates means to evacuate liquid or dense waste, through a scupper pipe.

The problem involved in the collection and evacuation of waste still has not been effectively solved. To the traditional problems of hygiene and collection frequency, the need of discriminating at origin the different types and/or nature of waste for its later recycling should be added (increasingly popular).

Therefore, both equipment capable of sorting the waste at origin and hermetically packing "in situ" are required, hence occupying a minimum space and making collection frequency less intense.

The present invention deals with a waste compactor/packer capable of executing these operations. Each compactor/packer may consist of one or several modules of a similar structure, it being possible, in this latter case, to compact/pack in each module waste of different types and/or nature, for its later recycling, to achieve this separation or organic/inorganic and metallic products, including glass and paper.

Likewise, a same compactor/packer, without changing the basis of the invention, instead of consisting of several similar modules, may integrate inside a same frame, several containers, different or equal, to achieve the selection more automatically and comprehensively.

The waste compactor/packer, according to the invention, is characterized in that it has a modular structure, each module consisting of:
a) at least one compactor equipment with a presser head, a collection/compactor container, a bottom tray and means to guided displacement of both the head with respect to the container and module chassis, to compact waste and to the container and bottom tray with respect to the module chassis for its loading;
b) at least one packer equipment, with the packing of compacted waste and means to hermetically close said package;
c) means for collection/evacuation of liquid or dense waste, and
d) means for cleaning and disinfecting the compactor equipment.

The application of the structured waste compactor/packer according to the invention, is suitable for both domestic and industrial waste (catering) or sanitary, being available in the same place where the waste is produced.

Using the waste compactor/packer, according to the invention, the removal period of waste to the exterior is significantly reduced, decreasing its frequency by one in five. The packets are compact and of the same size, their content being selected according to the outside shape or colour of the wrapping.

Using the waste compactor/packer, according to the invention, contact with the waste, its bad smell, its unpleasant appearance, daily exits and frequent collections, as well as overnight urban noise and important municipal expenses are avoided.

They may be kept/retained due to their air tightness and their piling capability permitting less exits. On being recycled in separate groups, it is even possible to sell the recycled products.

Using the pertinent control means, not described here because any expert, without having to contribute inventive step in his/her work, may do so in different ways (sensors, contactors or similar, including a duly programmed PLC, not described as they are conventional), the waste compactor/packer executes its functions stepwise, automatically detecting the need to perform one or other cyclic operations to do, sequentially, the following:
- Press and pack waste prior manual differentiation according to types.
- Reduce the solid volume to more than 5% of its rejected size.
- Wring out, liquify fats, liquids and greases, reducing their volume to directly eliminate them with water through the drain.
- Pack in continuous sacks compacting the reduced volume with the press and producing solid and clean packets by two alternative procedures:
   a) wrapping the waste in a retractable plastic sack rigidizing the contents and providing the packet a nice and totally air tight appearance. The latter may be piled and easily handled thanks to the perimetric handle incorporated into each packet. It may differentiated from other packets by its colour and shape.
   b) covering the waste in foam or injectable plastic or cellulose compounds, as above it may be piled and manipulated with a handle and distinguish by its shape, size and colour. Preferably these covers should be recyclable.

Neither procedure produces smell from their contents, nor exudes liquid substances, except in the case of breakage.
- Cleaning and disinfection; in a closed and automatic process, with global washing of all the elements which have had contact with the waste, followed by its disinfection and aromatization. This process is carried out after each packing cycle.

To understand the object of this invention better, the drawings show a preferable way of practical embodiment, susceptible to changes which do not alter its basis.

Figure 1 shows a general view of a waste compactor/packer, according to the invention, with its main components and parts, necessary for a unimodular configuration.

Figure 2 shows a general elevation section of a waste compactor/packer corresponding to the previous figure and in an open position (waste load/deposit) of its container (22).

Figure 3 shows a general view of a waste compactor/packer, according to the invention, with its components and parts necessary for an alternative configuration (incorporation of several collection containers (22) and presser heads (21) in a same compacting/pressing equipment (2) and in a same chassis/frame (1).

Figure 4 shows a general elevation section of a waste compactor/packer, corresponding to the practical embodiment of the previous figure.

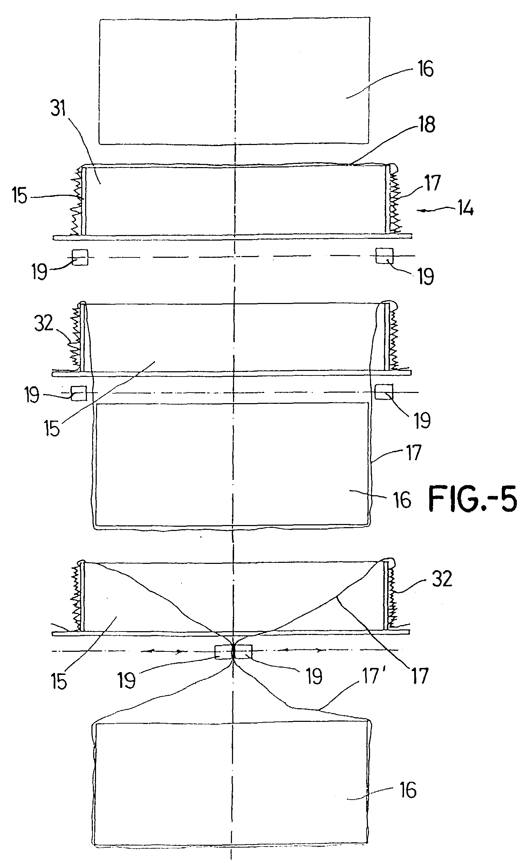

Figure 5 shows a three phase sequential diagram of the packer equipment (3).

The plurimodular configuration or the integration of several similar modules in a same frame/chassis (1) does not alter the basis of the model at all.

In these figures, the following references and/or details have been indicated.
- 1.: Chassis/frame.
- 2.: Compactor/presser equipment.
- 3.: Packing equipment.
- 4.: Collection equipment.
- 5.: Cleaning/disinfection equipment.
- 21.: Presser head.
- 22.: Collection/compacting container.
- 23.: Bottom tray.
- 31.: Packing frame.
- 32.: Packing.
- 33.: Thermal welders.
- 34.: Collection compartment.
- 41.: Liquid collection base.
- 42.: Motorpump and other power elements.
- 43.: Scupper pipe.
- RC.: Compacted waste.

An example of the practical embodiment, not limited, of the present invention is shown below. Other embodiments are not discarded in which auxiliary changes are introduced not fundamentally changing its basis. On the contrary, the present invention also includes all its variants.

According to the invention, the waste compactor/packer includes in a chassis/frame (1) various (four) compartments in which, respectively, the collection/compacting equipment (2), the packing equipment (3), the liquid and dense material collection/evacuation equipment (4) and the cleaning equipment (5) are located, in an arrangement permitting a cyclic/sequential operation of the compactor, without interference between phases and controlled by pertinent control methods (not described because they are obvious).

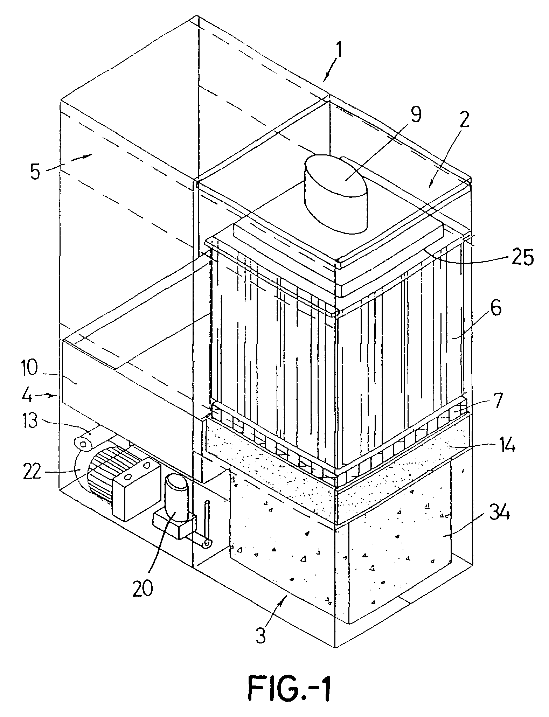

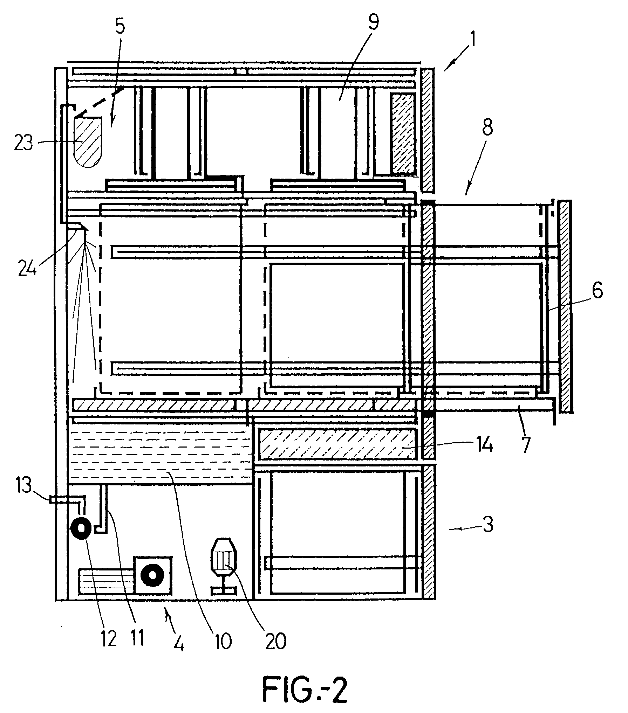

According to the embodiment represented in figures 1 and 2, the collection/compacting equipment (2) integrates a presser head (21); a container (22) and a bottom tray (23) where:
- the presser head (21) includes means for synchronized vertical linear displacement with respect to the chassis (1) and container (22), the latter being in the working position (pressed);
- the container (22) includes means for its synchronized linear displacement, both for its load and its cleaning, in which it is displaced together with the bottom tray (23);
- the bottom tray (23), is displaced separate from the container (22) when it is necessary to evacuate a block of compacted waste (RC) towards the packing equipment (3).

Displacement is possible with guides and means of activation, for example, they may be hydro-pneumatic or mechanical for the presser head (21) and hydro-pneumatic or mechanical for the container (22) and bottom tray (23), one or both activated electrically.

Thanks to the container structure (22) it is normally displaced towards the outside of the chassis/frame (1) as shown in figure 2, together with the lower tray (23), to receive the waste. When this container is full, together with the tray, it is returned to the interior of the chassis/frame, being situated beneath the presser head (21), so that said waste may be compacted.

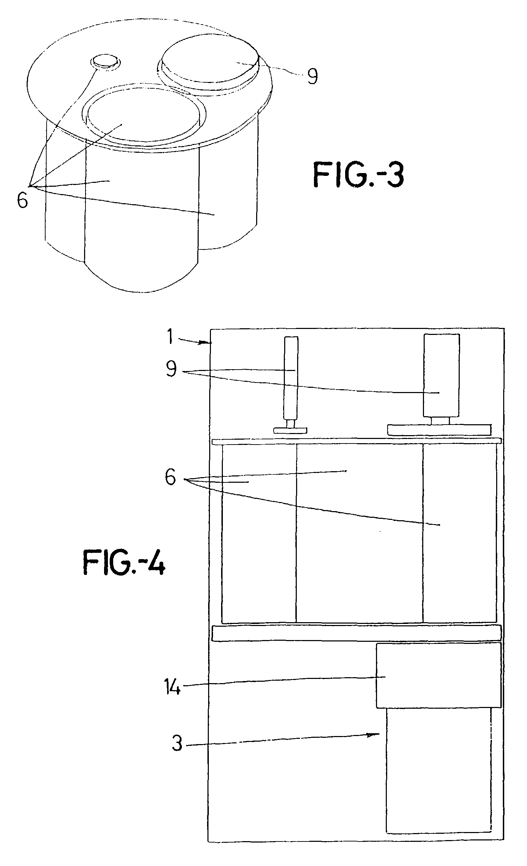

According to the embodiment represented in figures 3 and 4, a container (22) is available for each type of waste, the compacting unit (21) being common or not and that of block packing (3).

With this embodiment a selective waste collection (RC) is facilitated which will be compacted independently and collected by a same equipment (3) -by which the container-holder module (22) may rotate.

According to the represented embodiment, the packing equipment (3) integrates a packing frame (31) in which the packet (32) and means (33) are withdrawn -thermal-welders and, if necessary, blades- to hermetically close the packets (32) one by one with the compacted waste (RC) arranged inside.

The packing and air tight closing, with unitary separation takes place sequentially: the size of the compacted waste (RC) been detected inside the container (22) withdraws the tray (23) leaving the container (22) without a bottom, such that the compacted waste (RC) -if necessary aided by the head (21) acting as a pusher- are deposited over the package withdrawn in the packing frame (31).

Once in the lower compartment (34) of the module (1), the thermal-welders (33) are activated on approach, making the packet (32) air tight and efficiently separating it, either alone or by means of blades.

Specifically, the means to activate on approach/distancing of the thermal welders (33) are screws, threaded in counter position as from their ends and center.

Hence, once the waste has been compacted, the tray (23) is laterally displaced leaving the lower end of the container (22) open, such that the waste block descends towards the packing equipment (3), either by simple gravity or pushed by the presser head (21), dragging the package (32) during its descent, closed over the mouth of the packing frame (31) itself, due to the effect of the previous operation cycle of the compactor/packer, said continuous packing (32) being unfolded by the amount necessary, such that the waste block (RC) descends until the bottom of the packing equipment (3), a situation in which the closure and cutting of the sack obtained from said packing (32) is produced, by means of the approach of thermal-welders (33) with their corresponding blades, the package being in suitable conditions to receive a new compacted waste block (RC), whilst the packed block leaves the packing equipment (3) laterally.

According to the embodiment represented, the liquid or dense material collection/evacuation equipment (4) consists of a collection base (41) in communication with a scupper pipe (43) suitably provided with a motor pump (42) and other power components producing its total controlled emptying.

Said liquid or dense material collection equipment is completed with various vertical grooves in the front and sides of the container (22) and several holes respectively in the rear area of the container (22) and in the bottom tray (23), said grooves and holes contributing to the flow of liquids and dense materials towards the collection base (41).

Therefore, during the waste pressing phase, by the compactor equipment (2) and inside the container (22), due to the effect of the pressure of the liquid and dense waste, they tend to flow to the outside with the collaboration of the grooves and holes defined in the walls and bottom of said container, considering as such the lower tray (23) also, from where they pass to the liquid collection base (41) from where the motor-pump (42) discharges them towards the scupper pipe (43).

According to the represented embodiment, the cleaning/disinfection equipment (5) includes several pressurized water projectors (51), if necessary preheated and with detergents and/or disinfectants added. Said projectors (51) are arranged in the corresponding module compartment (1), to which is withdrawn/returned both the presser head (21) and the container (22) and the bottom tray (23) available for their cleaning/disinfection over the collection base (41).

Without changing the basis of the module at all, the inclusion of projectors in the head (21) have been foreseen, acting in a synchronized manner in this phase forming part of the cleaning equipment (5).

With this structure, the sequential operation of the waste compactor/packer takes place as indicated below:

### a) Compacting/pressing process.

- Open machine = deposit waste.
- Close = press in each closure or press when sufficient volume is detected by two crossed rays from above.
- Run detector = if detected it executes, and when reset for the same operation, if it is not detected it stops and produces the packing process.

Compactor equipment components (2):
- Hydraulic press of 1mT approx., rectangular, round or any section. Container with a rectangular, round or any other section, with a slightly inverted trapezium (one degree), corresponding to the presser piston.

Without a bottom, rustless, with three blind faces and grooved from top to bottom and a perforated rear.
- Bottom tray of smooth casting and perforated above, with ribs beneath and supported on the container tray.
- Electric hydraulic pump or other equivalents.
- Electric/mechanical equipment or equivalent.

### b) Packing process:

- Presser signal. The base and presser tray slide towards the machine bottom, in this way, the lower free end remaining free for circulation.
- The presser descends pushing the compacted rubbish through the open space below and leaning on the end of the packing component, which presents its closed sack upwards and which will form the inside bottom of the final packet. The press continues pushing upwards until accommodating all the rubbish inside the sack, which due to the pushing would have been forming inside.
- Once the packet has settled on the bottom, introduced in its sack and prior displacement of the piston upwards, the helicoidal movement of the electrodes is produced in ordered manner, thanks to the hinging described to execute the welding, in two parallel beads, the two sections being separated by a blade located in between, which may be electric, hot or mechanical.
- Welding by conventional methods, for example, by pressure and temperature (high frequency thermal-welding process).
- Then, a jet of hot air directed towards the inside of the space, executes the withdrawing effect over the plastic, which is compressed against the waste forming a compact and clean packet.
- Led for completed cycle and ready to manually detach the sack.
- The tubular sack, has a perimetric tape welded inside and joined to three faces and free at the fourth, to serve as a handle to the compacted waste. This handle will be welded in the manufacturing process of the consumable, at intervals equivalent to one sack unit, this handle not being of retractile plastic.

Components of the packing equipment (3):
- Stainless steel structure with two parallel electrodes and cutting blade between, activated by two inverse threaded helicoidal shafts, permitting the parallel displacement from outside to in, which may be manually or mechanically activated, with ordered hinging of the sack for closure.
- Consumable spare part consisting of a cardboard or plastic structure, in which the retractile tubular plastic sack is stored, fixed at its end, wrinkled over its base and welded forming a permanent tube with a closed mouth.
- Assembly over sliding draw outwards for consumable spare part.
- Electric equipment.

### c) Cleaning process.

- Once the rubbish has been pushed, the piston rises and stops before completely leaving the pressing container.
- Transfer towards the bottom of the machine dragging the container by its polyethylene or other material guides.

Likewise a water jet is produced over the deposit, by a pipe in is entire perimeter, dragging the accumulated rubbish in it and pumping the water outside.
- With hot water, the piston starts the slow descent and ascent several times, below and above, projecting the jet against the container walls and tray bottom.
- Likewise, another jet statically cleans the rear exterior of the container and joining walls, the ascending movements coinciding with the consumption of hot water and dosing with detergent for this operation.
- The cycle terminates by rinsing with cold water and dosing with aromatic disinfectant (one cycle).
- Pumping of water simultaneously for total emptying and permanently controlled by a level detector.
- Return of the piston, tray and container to its original position.
- A new permitted cycle starts even without having removed the previous packet. Naturally, this cycle will be stopped if the container is filled and requests more packing without having removed the previous one.

Cleaning/disinfection equipment components (5).

### Piston plunger:

- Of various sections and shapes, it is equipped with internal channels supplied from the main entrance in their upper part, by means of high pressure flexible jets, projecting water through perforated lances located in the end of the channels with perimetric outlets in the entire configuration and lower part of the plunger.
- Each one of the outlets corresponds to an independent inlet, hence concentrating all the pressure individually in each jet, to avoid blocking of the outlets by any object, which due to the effect of the compression, had remained embedded.
- Different mechanical protections, prevent the wetting of certain parts during washing. The materials, dimensions, proportions and generally, those other auxiliary or secondary details, which do not alter, change or modify the purpose of the invention may be varied.

The terms in which this report is drawn up are certain and a true representation of the purpose described, and should be interpreted in the widest sense and never limited.

## Claims

1. Waste compactor/packer, characterized in that, having a modular structure, each module consists of:
a) at least one compactor equipment with a presser head, a collection/compacting container, a bottom tray and means for guided displacement of both the head with respect to the container and the module chassis for waste compacting and to the container and bottom tray with respect to the module chassis for its loading;
b) at least one packing equipment, with the packing for compacted waste and means to hermetically close said packing;
c) means for liquid or dense waste collection/evacuation and
d) means for cleaning and disinfection of the compacting equipment.

2. Waste compactor/packer, according to the previous claim, characterized in that the mentioned means to hermetically close said packing, one by one, with the compacted waste are:
a) a packing frame, carrier of the folded packing and admitting the compacted waste, simultaneously to its unfolding;
b) means to hermetically close said packing by thermal-welding or similar and separating one by one, once the compacted waste has been deposited in its interior;
c) heating means, causing the withdrawal of the packing against the compacted waste block.

3. Waste compactor/packer, according to previous claims, characterized in that said means for hermetic closure by thermal-welding of the packet, consists of pairs of displaceable electrodes in counter position by manual, mechanical, hydro-pneumatic or similar activation and the means for unit separation of packets are cutting blades.

4. Waste compactor/packer, according to previous claims, characterized in that the mentioned means for liquid or dense material collection/evacuation are:
a) in the collection/compacting container, several vertical grooves in the front and side areas and numerous perforation in their rear area and
b) in the bottom tray, numerous perforations through which flow liquid or dense waste towards a collecting base, arranged or shaped beneath the bottom tray, ramped towards the rear area of the module and in direct communication with a scupper pipe.

5. Waste compactor/packer, according to previous claims, characterized in that the mentioned means for cleaning/disinfection of the compacting equipment are for each module:
a) means to withdraw/return, both to the presser head and the collection container and its bottom tray towards/from the rear area of the module, over a platform in direct communication with a scupper pipe, said means being sliding guides and electric equipment;
b) means for projecting water under pressure, if necessary pre-heated and with detergents and/or disinfectants added, which, in synchronized cyclic action, perform the cleaning and disinfection of both the presser head and the container and bottom tray; said means being high pressure flexible projecting water through perforated lances arranged in the machine chassis and/or the presser head itself;
c) means for total controlled emptying through the conduits; said means being one or several drainage motor-pumps.
